# EUROPÄISCHE PATENTSCHRIFT

(11) **EP 1 437 250 B1**
(45) Veröffentlichungstag und Bekanntmachung des Hinweises auf die Patenterteilung: **17.01.2007**
(21) Anmeldenummer: 03028323.8
(22) Anmeldetag: 10.12.2003
(51) Int. Cl.: B60J 7/20, B60J 7/185, B60J 7/12

(54) **Abdeckung für einen Verschluss eines Verdecks**
Cover for a locking device of a convertible top
Couverture d'un dispositif de verrouillage d'un toit convertible

(30) Priorität: 13.01.2003 DE 10300883
(43) Veröffentlichungstag der Anmeldung: 14.07.2004
(73) Patentinhaber: Dr.Ing. h.c.F. Porsche Aktiengesellschaft, 70435 Stuttgart (DE); Gross, Beatrix, 70469 Stuttgart (DE)
(72) Erfinder: Küstner, Markus, 71636 Ludwigsburg (DE); Schmidt, Horst, 70469 Stuttgart (DE)

(56) Entgegenhaltungen:
- DE-C- 4 113 616
- US-A- 5 671 966
- US-A- 5 772 275
- US-A1- 2002 093 218
- US-B1- 6 361 086

## Beschreibung

Die Erfindung bezieht sich auf eine Abdeckung für einen Verschluß eines Verdecks in einem Cabrioletfahrzeug nach dem Oberbegriff des Anspruchs 1.

Aus der DE 197 21 229 A1 ist ein Verdeckverschluß für Cabrioletfahrzeuge bekannt, der mit einem abdeckenden Gehäuse fest verbunden ist. Der Verdeckverschluß mit samt Gehäuse wird mit einem Verdeckrahmen des Fahrzeugs über Schraubmittel verbunden, die mittels einer einklipsbaren Gehäuseplatte abgedeckt sind.

Die Aufgabe der Erfindung besteht darin, eine Abdeckung für einen Verdeckverschluß in einem Cabrioletffahrzeug zu schaffen, der eine einfache Zugänglichkeit zum Verschluß gewährleistet.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten Vorteile bestehen darin, daß die Abdeckschale jederzeit lösbar vom Verdeckverschluß gestaltet ist. Hierzu besteht die Abdeckschale aus einem den ortsfest an einem Verdeckrahmen befestigten Verdeckverschluß rundum umschließenden Gehäuse, das über eine Halterung und Rastöffnungen mit mindestens einer korrespondierenden Haltenase und Rastnasen am Verschluß lösbar festsetzbar ist.

Hierdurch wird in vorteilhafter Weise erreicht, daß der Verdeckverschluß durch ein einfaches Abnehmen der Abdeckschale zugänglich ist und beispielsweise eine Notbetätigung des Verdecks durchgeführt werden kann, indem ein Betätigungselement mit dem Verschluß verbunden wird.

Insbesondere ist vorgesehen, daß die Abdeckschale an einem - in Fahrtrichtung F gesehen - hinteren Randabschnitt eine als eingeformte Tasche für die verschlußseitige Haltenase ausgebildete Halterung aufweist. Diese Tasche wird von seitlichen Wänden begrenzt, die mit einer etwa horizontal ausgerichteten übergreifenden Wandung einer Griffmulde verbunden sind. Die Verbindung der Abdeckschale mit dem Verschluß erfolgt zuerst über die verschlußseitige Haltenase.

Desweiteren ist nach der Erfindung vorgesehen, daß die Abdeckschale an einem - in Fahrtrichtung gesehenen - vorderen innenliegenden Quersteg zu beiden Seiten einer Ausnehmung die Rastöffnungen für die Rastnasen aufweist. Ein nachfolgendes Festsetzen der Abdeckschale am Verschluß erfolgt über ein Einrasten der Rastnasen in die Rastöffnungen.

Damit ein einfaches Einrasten sowie eine feste Verbindung zwischen Abdeckschale und Verschluß erfolgen kann, ist der Quersteg über Längsstege zum vorderen Außenrand der Abdeckschale abgestützt und ein Bereich zwischen den Längsstegen ist quasi elastisch ausgeführt. Ferner weist der Quersteg im Bereich der Rastöffnungen eine flächige Einführschräge für die Rastnasen des Verschlusses auf. Somit wird es möglich, daß die Rasthaken zum Festsetzen der Abdeckschale eine optimale Haltefunktion bewirken, aber auch ein Abnehmen der Abdeckschale vom Verschluß in einfacher Weise möglich ist.

Die Abdeckschale ist zur Einnahme einer Abdeckposition auf dem Verdeckverschluß über die Haltenasen in einer Schrägstellung der Schale in der Tasche eingesteckt gehalten und die Schale ist in der Abdeckposition auf dem Verdeckverschluß über die Rastnasen durch ein Hochdrücken in die Rastöffnungen einklipsbar.

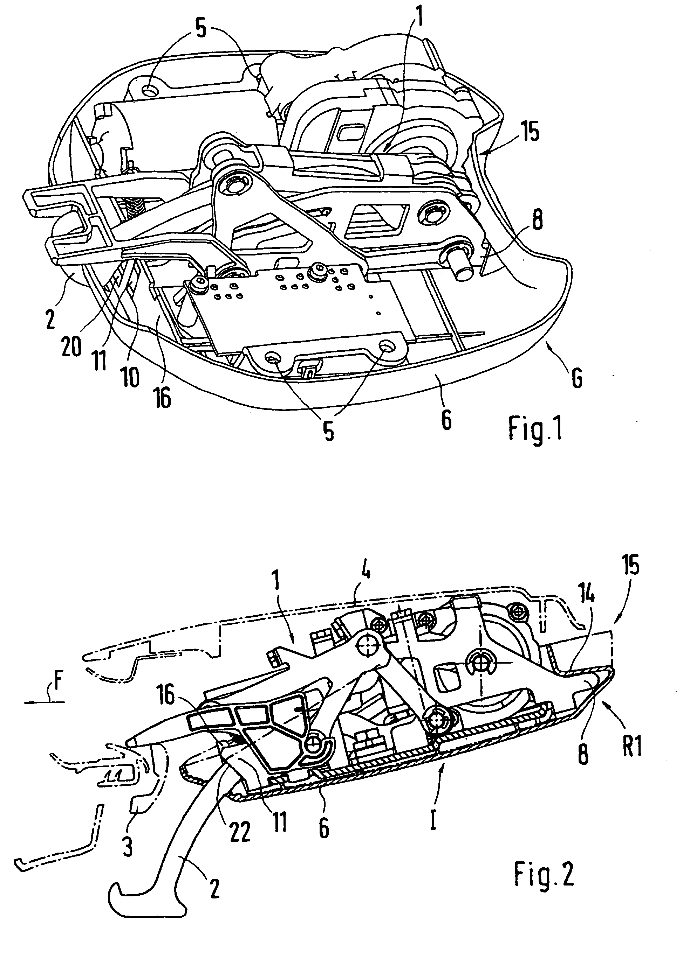

Ein Ausführungsbeispiel der Erfindung ist in den Zeichnungen dargestellt und wird im folgenden näher beschrieben.
Es zeigen
- Fig. 1: eine schaubildliche Darstellung des Verdeckverschlusses mit einer ansetzbaren Abdeckschale,
- Fig. 2: einen Schnitt durch den Verdeckverschluß mit Haltenase und Rastnasen,

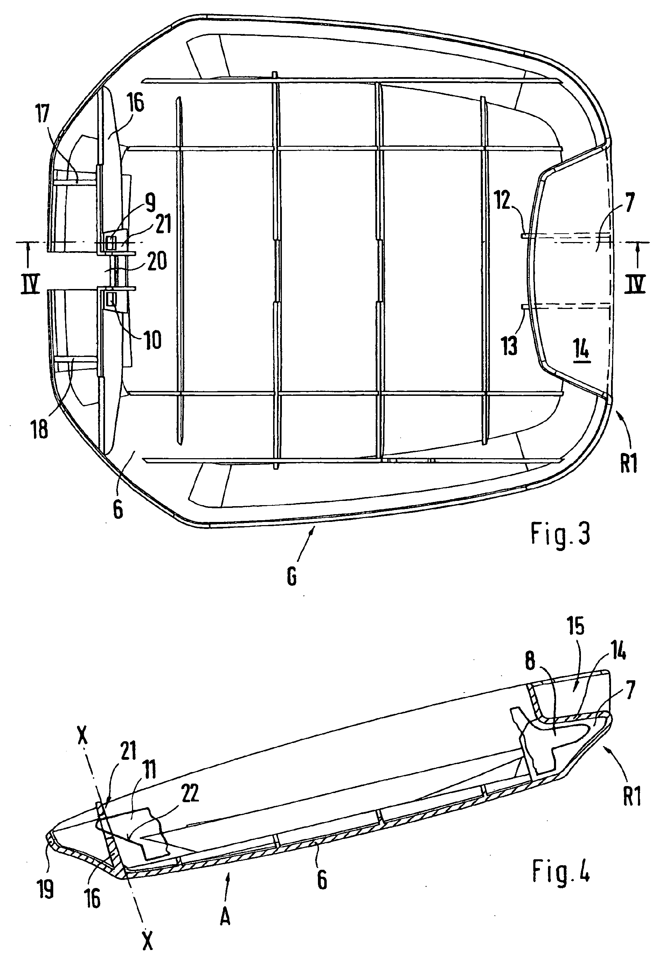

- Fig. 3: eine Innenansicht der Abdeckschale und
- Fig. 4: einen Schnitt nach der Linie IV-IV der Fig. 3.

Ein Verdeckverschluß 1 dient zum Festsetzen eines Cabrioletverdecks über einen bewegbaren Verschlußhaken 2, mit einer am Windschutzscheibenrahmen 3 angeordneten Kulisse, wobei der Verschluß 1 mit einem Verdeckrahmen 4 über Schraubmittel verbunden ist, die in Bohrungen 5 des Verschlusses 1 gehalten sind.

Zur Abdeckung des Verschlusses 1 zum Innenraum des Fahrzeugs hin ist eine Abdeckschale 6 vorgesehen, die ein rundum umschließendes Gehäuse G für den Verschluß 1 bildet. Die Abdeckschale 6 umfaßt eine Halterung 7 für eine verschlußseitige Haltenase 8 sowie Rastöffnungen 9, 10 für verschlußseitige Rastnasen 11. Die Halterung 7 besteht aus einer - in Fahrtrichtung F gesehenen - hintenliegenden sogenannten Tasche im Randabschnitt R1 der Abdeckschale 6 und ist von seitlichen Wänden 12, 13 begrenzt, die obenseitig mit einer übergreifenden Wandung 14 einer Griffmulde 15 verbunden sind. Die Rastöffnungen 9, 10 sind in einem Quersteg 16 zu beiden Seiten einer Ausnehmung 20 für den Verschlußhaken 2 angeordnet. Der Quersteg 16 ist über Längsstege 17, 18 zum hochgestellten Außenrand 19 der Abdeckschale 1 abgestützt. Zwischen den Längsstegen 17, 18 ist der Quersteg 16 soweit elastisch ausgeführt, daß die Rastnasen 11 in die Rastöffnungen 9, 10 einrastbar sind.

Damit ein Einführen der Rastnasen 11 in die Öffnungen 9, 10 einfach möglich wird, sind die Öffnungen 9, 10 mit einer flächigen Einführschräge 21 in der Ebene X-X versehen.

Zum Verbinden der Abdeckschale 6 mit dem Verdeckverschluß 1 wird zuerst die Haltenase 8 in die taschenförmige Halterung 7 bei einer Schrägstellung eingeführt und nachfolgend wird die Abdeckschale 6 mit dem vorderen Ende in Peilrichtung A hochgedrückt, so daß die Rastnasen 11 in die Öffnungen 9, 10 einhaken können. Die freien Enden der Rastnasen 11 sind hierzu beispielsweise mit einer Schräge 22 versehen.

## Patentansprüche

1. Abdeckung für einen Verschluß eines Verdecks in einem Cabrioletfahrzeug mittels einer dem Fahrzeuginnenraum zugerichteten Abdeckschale, **dadurch gekennzeichnet, daß** die Abdeckschale (6) aus einem den ortsfest an einem Verdeckrahmen (4) befestigten Verdeckverschluß (1) rundum umschließenden Gehäuse (G) besteht, das über eine Halterung (7) und Rastöffnungen (9, 10) mit mindestens einer korrespondierenden Haltenase (8) und Rastnasen (11) am Verschluß (1) lösbar an diesem festsetzbar ist.

2. Abdeckung nach Anspruch 1, **dadurch gekennzeichnet, daß** die Abdeckschale (6) an einem - in Fahrrichtung F gesehenen - hinteren Randabschnitt (R1) eine als eingeformte Tasche für die verschlußseitige Haltenase (8) ausgebildete Halterung (7) aufweist.

3. Abdeckung nach den Ansprüchen 1 oder 2, **dadurch gekennzeichnet, daß** die Tasche von seitlichen Wänden (12, 13) begrenzt ist, die mit einer etwa horizontal ausgerichteten übergreifende Wandung (14) einer Griffmulde (15) verbunden sind.

4. Abdeckung nach den Ansprüchen 1, 2 oder 3, **dadurch gekennzeichnet, daß** die Abdeckschale (6) an einem - in Fahrtrichtung F gesehenen - vorderen innenliegenden Quersteg (16) zu beiden Seiten einer Ausnehmung (20) die Rastöffnungen (9, 10) für die Rastnasen (11) aufweist.

5. Abdeckung nach Anspruch 4, **dadurch gekennzeichnet, daß** der Quersteg (16) über Längsstege (17, 18) zu einem vorderen Außenrand (19) der Abdeckschale (6) abgestützt ist und ein Bereich zwischen den Längsstegen (17, 18) elastisch ausgeführt ist.

6. Abdeckung nach einem der vorhergehenden Ansprüche, **dadurch gekennzeichnet, daß** der Quersteg (16) im Bereich der Rastöffnungen (9, 10) eine flächige Einführschräge (21) für die Rastnasen (11) des Verschlusses (1) aufweist.

7. Abdeckung nach einem der vorhergehenden Ansprüche, **dadurch gekennzeichnet, daß** die Schale (6) zur Einnahme einer Abdeckposition (I) auf dem Verdeckverschluß (1) die Haltenase (8) in einer Schrägstellung der Schale (6) in der Tasche (7) eingesteckt gehalten ist und die Schale (6) in der Abdeckposition (II) auf dem Verdeckverschluß (1) die Rastnasen (11) in die Rastöffnungen (9, 10) einklipsbar sind.

## Claims

1. A cover provided for a catch of a folding top of a convertible vehicle by means of a covering shell facing the vehicle interior, **characterised in that** the covering shell (6) comprises a housing (G) which completely encloses the folding-top catch (1) fixedly mounted on a folding-top frame (4) and is detachably securable to the catch (1) by means of a retainer (7) and locking openings (9, 10) with at least one complementary retaining projection (8) and locking projections (11) on the catch (1).

2. A cover according to claim 1, **characterised in that** a rear edge portion (R1) - seen in the direction of travel F - of the covering shell (6) has a retainer (7) formed as a moulded pocket for the retaining projection (8) on the catch.

3. A cover according to claim 1 or claim 2, **characterised in that** the pocket is bounded by side walls (12, 13) connected to an approximately horizontally extending, overlapping wall (14) of a recessed grip (15).

4. A cover according to claim 1, 2 or 3, **characterised in that** the locking openings (9, 10) for the locking projections (11) are provided in the covering shell (6) in a front interior transverse web (16) - seen in the direction of travel F - on either side of an aperture (20).

5. A cover according to claim 4, **characterised in that** the transverse web (16) is supported in relation to a front outer edge (19) of the covering shell (6) by longitudinal webs (17, 18), and a region between the longitudinal webs (17, 18) is resiliently formed.

6. A cover according to any one of the preceding claims, **characterised in that** the transverse web (16) has, in the region of the locking openings (9, 10), a planar insertion chamfer (21) for the locking projections (11) of the catch (1).

7. A cover according to any one of the preceding claims, **characterised in that**, when the shell (6) adopts a covering position (I) on the folding-top catch (1), the retaining projection (8) is held inserted in the pocket (7) in an oblique position of the shell (6) and, when the shell (6) is in the covering position (II) on the folding-top catch (1), the locking projections (11) can be clipped into the locking openings (9, 10).

## Revendications

1. Couverture pour un dispositif de verrouillage d'un toit convertible dans un cabriolet au moyen d'une coque de recouvrement orientée vers l'habitacle du véhicule, **caractérisée en ce que** la coque de recouvrement (6) est constituée d'un boîtier (G) entourant entièrement le dispositif de verrouillage de toit convertible (1) fixé de manière stationnaire à un cadre de toit (4), lequel boîtier peut être fixé sur le dispositif de verrouillage (1) de manière amovible par une fixation (7) et des ouvertures d'enclenchement (9, 10) comprenant au moins un tenon de maintien (8) correspondant et des tenons d'enclenchement (11).

2. Couverture selon la revendication 1, **caractérisée en ce que** la coque de recouvrement (6) comprend sur une section latérale arrière (R1) vue dans la direction de déplacement F- une fixation (7) conçue comme une poche moulée pour le tenon de maintien (8) côté dispositif de verrouillage.

3. Couverture selon l'une quelconque des revendications 1 ou 2, **caractérisée en ce que** la poche est limitée par des parois latérales (12, 13) qui sont reliées à une paroi chevauchante (14) orientée approximativement horizontalement d'une poignée concave (15).

4. Couverture selon l'une quelconque des revendications 1, 2 ou 3, **caractérisée en ce que** la coque de recouvrement (6) comprend sur une traverse interne avant (16) -vue dans la direction de déplacement F- de part et d'autre d'un évidement (20) les ouvertures d'enclenchement (9, 10) pour les tenons d'enclenchement (11).

5. Couverture selon la revendication 4, **caractérisée en ce que** la traverse (16) est soutenue par des nervures longitudinales (17, 18) par rapport à un bord extérieur avant (19) de la coque de recouvrement (6) et une zone entre les nervures longitudinales (17, 18) est réalisée de manière élastique.

6. Couverture selon l'une quelconque des revendications précédentes, **caractérisée en ce que** la traverse (16) comprend dans la zone des ouvertures d'enclenchement (9, 10) un chanfrein d'introduction plat (21) pour les tenons d'enclenchement (11) du dispositif de verrouillage (1).

7. Couverture selon l'une quelconque des revendications précédentes, **caractérisée en ce que** la coque (6), pour occuper une position de recouvrement (I) sur le dispositif de verrouillage de toit convertible (1), est maintenue enfoncée dans la poche (7) par le tenon de maintien (8) dans une position inclinée de la coque (6) et la coque (6) dans la position de couverture (II) sur le dispositif de verrouillage de toit convertible (1) peut être encliquetée dans les ouvertures d'enclenchement (9, 10) par les tenons d'enclenchement (11).
